(19) Europäisches Patentamt
European Patent Office
Office européen des brevets

(11) **EP 4 489 321 A1**

(12) **EUROPEAN PATENT APPLICATION**
published in accordance with Art. 153(4) EPC

(43) Date of publication:
**08.01.2025 Bulletin 2025/02**

(21) Application number: **22927895.7**

(22) Date of filing: **28.02.2022**

(51) International Patent Classification (IPC):
***H04B 7/0456*** (2017.01)    ***H04B 7/0413*** (2017.01)
***G06N 3/02*** (2006.01)

(52) Cooperative Patent Classification (CPC):
**G06N 3/02; H04B 7/0413; H04B 7/0456**

(86) International application number:
**PCT/CN2022/078445**

(87) International publication number:
**WO 2023/159614 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **CHEN, Dong
Beijing 100085 (CN)**
• **CHI, Liangang
Beijing 100085 (CN)**
• **XU, Wei
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **PRECODING MATRIX DETERMINATION METHOD AND DEVICE/STORAGE MEDIUM/
APPARATUS**

(57)    The present disclosure belongs to the technical field of communications. Provided are a precoding matrix determination method and device/storage medium/apparatus. The method comprises: acquiring channel feature information $q_{k,t}$ and a compression ratio parameter $\gamma$ from a user equipment (UE), wherein k is used for indicating a kth UE, and t is used for indicating a timestamp; and on the basis of the compression ratio parameter y and the channel feature information $q_{k,t}$, determining a precoding matrix $F_t$, $W_t$. The present disclosure provides a simple and efficient method for determining a precoding matrix under low-overhead limited feedback.

obtain channel characteristic information and a compression rate parameter from a UE — 101a

determine precoding matrices Ft and Wt based on the channel characteristic information and the compression rate parameter — 102a

FIG. 1a

**Description**

## TECHNICAL FIELD

The disclosure relates to a field of communication technologies, in particular to a precoding matrix determination method and apparatus/storage medium/device.

## BACKGROUND

Since the massive Multiple-Input Multiple-Output (m-MIMO) technology has good stability, energy utilization, and anti-interference capability, the m-MIMO system is often used for wireless communication. In the m-MIMO system, a user equipment (UE) usually needs to feed back a downlink channel matrix to a base station, so that the base station can determine a downlink precoding matrix according to the channel matrix. Since there are a large amount of antennas at the base station in the m-MIMO system, correspondingly, the number of downlinks at the base station is large, which leads to a large overhead of feeding back channel matrixes. Therefore, simple and efficient precoding matrix determination methods with low overhead under limited feedback are urgently needed.

In the related art, the common precoding matrix determination methods are provided in the follow contexts.

Method 1. Using the estimated channel matrix and the given codebook, each UE finds the analog domain precoding/combining vector that maximizes the modulus of the low-dimensional baseband equivalent channel vector by an exhaustive search method. The corresponding low-dimensional baseband equivalent channel vector is obtained based on the determined analog domain precoding/combining vector. The UE sends the low-dimensional baseband equivalent channel vector and the corresponding codebook information to the base station, so that the base station can determine the digital domain precoding matrix through the zero-forcing (ZF) method using the low-dimensional equivalent channel vector.

Method 2. Through the Convolutional Neural Networks (CNN) reinforcement learning, the base station obtains a mapping from the environment to the user beam direction to find the direction where the user beam is most likely to appear, in order to concentrate the sensing beam energy as much as possible and reduce the number of sensing beams. The base station also uses the CNN to learn how to use a small number of sensing vectors to determine the corresponding precoding/combining matrix, and then directly determines the precoding matrix based on the feedback parameters sent by the UE in combination with the small number of sensing vectors learned via the CNN.

However, in the related art, method 1 uses the exhaustive search method to determine the analog domain precoding/combining vector, which has high computational complexity and low efficiency, and also requires a careful design of the codebook. In method 2, the CNN established at the base station fails to fully exploit the internal characteristics of channel state information, nor does it consider the variation trend of channel data in time, which makes it difficult for the base station to accurately determine the precoding matrix of the UE.

## SUMMARY

The disclosure provides a precoding matrix determination method and apparatus/storage medium/device, to solve the technical problems of low efficiency, high computational complexity and undesirable pre-coding design effects in the related art.

According to a first aspect of embodiments of the disclosure, a precoding matrix determination method, performed by a base station, is provided. The method includes:

obtaining channel characteristic information $q_{k,t}$ and a compression rate parameter $\gamma$ from a user equipment (UE), in which k is used to indicate a kth UE and t is used to indicate a timestamp; and
determining precoding matrices Ft and Wt based on the compression rate parameter $\gamma$ and the channel characteristic information $q_{k,t}$.

Optionally, in an embodiment of the disclosure, the channel characteristic information $q_{k,t}$ is obtained after processing channel estimation information $h_{k,t}$ by a first sub-network at a UE side, in which a dimension of the channel characteristic information $q_{k,t}$ is lower than a dimension of the channel estimation information $h_{k,t}$, the compression rate parameter y is a compression rate of the first sub-network; and the first sub-network includes a first convolutional neural network and a first long short term memory (LSTM), in which the first convolutional neural network and the first LSTM are connected in a residual-like network manner.

Optionally, in an embodiment of the disclosure, determining the precoding matrices Ft and Wt based on the compression rate parameter y and the channel characteristic information $q_{k,t}$ includes:

determining a second sub-network corresponding to the compression rate parameter y; and
inputting the channel characteristic information $q_{k,t}$ into the second sub-network to output the precoding matrices Ft and Wt.

Optionally, in an embodiment of the disclosure, the second sub-network includes a first network module and a second network module that are in parallel;

the first network module includes a second LSTM, a first residual neural network and a computing module that are connected in sequence, the first residual neural network includes a first one-dimensional convolutional network and a first residual unit consisting of n convolutional neural networks, n being a positive integer, and the first one-dimensional convolutional network and the first residual unit are connected in a residual-like network manner; in which the channel characteristic information $q_{k,t}$ is processed by the second LSTM and the first residual neural network to obtain a phase shifter angle $\Theta_t$, and the computing module is configured to calculate and output the precoding matrix Ft based on the phase shifter angle $\Theta_t$;

the second network module includes a third LSTM, a second residual neural network and a normalization module that are connected in sequence, an input end of the normalization module is connected to an output end of the computing module, the second residual neural network includes a second one-dimensional convolutional network and a second residual unit consisting of n convolutional neural networks, and the second one-dimensional convolutional network and the second residual unit are connected in a residual-like network manner; in which the channel characteristic information $q_{k,t}$ is processed by the third LSTM, the second residual neural network and the normalization module to obtain and output the precoding matrix Wt; and

a matrix size corresponding to the first residual neural network is different from a matrix size of the second residual neural network.

Optionally, in an embodiment of the disclosure, the base station includes at least one second sub-network, in which different second sub-networks have different compression rates;

the method includes:
arranging at least one analog sub-network at a base station side based on a structure of the first sub-network, in which the analog sub-network has the same structure as the first sub-network, and different analog sub-networks have different compression rates;
connecting the second sub-network with the analog sub-network having the same compression rate to obtain at least one precoding matrix determination network;
obtaining channel estimation information $h_{k,t}$ from each UE;
determining a sample data set H based on the channel estimation information $h_{k,t}$ from each UE; and
training the precoding matrix determination network based on the sample data set H.

Optionally, in an embodiment of the disclosure, the method includes:

determining network parameters corresponding to a trained analog sub-network; and
sending the network parameters to the UE.

According to a second aspect of embodiments of the disclosure, a precoding matrix determination method, performed by a UE, is provided. The method includes:

determining channel estimation information $h_{k,t}$, in which k is used to indicate a kth UE and t is used to indicate a timestamp corresponding to the channel estimation information $h_{k,t}$;
determining channel characteristic information $q_{k,t}$ based on the channel estimation information $h_{k,t}$, in which a dimension of the channel characteristic information $q_{k,t}$ is lower than a dimension of the channel estimation information $h_{k,t}$; and
sending the channel characteristic information $q_{k,t}$ and a compression rate parameter y to a base station.

Optionally, in an embodiment of the disclosure, determining the channel characteristic information $q_{k,t}$ based on the channel estimation information $h_{k,t}$ includes:

inputting the channel estimation information $h_{k,t}$ into a first sub-network to output the channel characteristic information $q_{k,t}$;
in which the first sub-network includes a first convolutional neural network and a first long short term memory (LSTM) that are connected in a residual-like network manner, and the compression rate parameter y is a compression rate of the first sub-network.

Optionally, in an embodiment of the disclosure, the method includes:

receiving network parameters sent by the base station; and
arranging the first sub-network based on the network parameters.

According to a third aspect of embodiments of the disclosure, a precoding matrix determination apparatus is provided. The apparatus includes:

an obtaining module, configured to obtain channel characteristic information $q_{k,t}$ and a compression rate parameter $\gamma$ from a user equipment (UE), in which k is used to indicate a kth UE and t is used to indicate a timestamp corresponding to the channel characteristic information $q_{k,t}$; and
a determining module, configured to determine precoding matrices Ft and Wt based on the compression rate parameter y and the channel characteristic information $q_{k,t}$.

According to a fourth aspect of embodiments of the disclosure, a precoding matrix determination apparatus is provided. The apparatus includes:

a determining module, configured to determine channel estimation information $h_{k,t}$, in which k is used to indicate a kth UE and t is used to indicate a timestamp corresponding to the channel estimation information $h_{k,t}$;
in which the determining module is further configured to determine channel characteristic information $q_{k,t}$ based on the channel estimation information $h_{k,t}$, in which a dimension of the channel characteristic information $q_{k,t}$ is lower than a dimension of the channel estimation information $h_{k,t}$; and
a sending module, configured to send the channel characteristic information $q_{k,t}$ and a compression rate parameter y to a base station.

According to a fifth aspect of embodiments of the disclosure, a communication device is provided. The communication device includes a processor and a memory having a computer program stored thereon. When the computer program is executed by the processor, the communication device is caused to perform the method described in embodiments of the first aspect.

According to a sixth aspect of embodiments of the disclosure, a communication device is provided. The communication device includes a processor and a memory having a computer program stored thereon. When the computer program is executed by the processor, the communication device is caused to perform the method described in embodiments of the second aspect.

According to a seventh aspect of embodiments of the disclosure, a communication device is provided. The communication device includes: a processor and an interface circuit.

The interface circuit is configured to receive code instructions and transmit the code instructions to the processor.

The processor is configured to run the code instructions to execute the method described in embodiments of the first aspect.

According to an eighth aspect of embodiments of the disclosure, a communication device is provided. The communication device includes: a processor and an interface circuit.

The interface circuit is configured to receive code instructions and transmit the code instructions to the processor.

The processor is configured to run the code instructions to execute the method described in embodiments of the second aspect.

According to a ninth aspect of embodiments of the disclosure, a computer readable storage medium having instructions stored thereon is provided. When the instructions are executed, the method described in embodiments of the first aspect is performed.

According to a tenth aspect of embodiments of the disclosure, a computer readable storage medium having instructions stored thereon is provided. When the instructions are executed, the method described in embodiments of the second aspect is performed.

In conclusion, in the precoding matrix determination method and apparatus/storage medium/device according to embodiments of the disclosure, the base station obtains the compression rate parameter y and the channel characteristic information $q_{k,t}$ that is obtained via the first sub-network by the UE, in which k is used to indicate the kth UE and t is used to indicate a timestamp. The precoding matrices Ft and Wt are determined via the second sub-network based on the compression rate parameter y and the channel characteristic information $q_{k,t}$. In embodiments of the disclosure, the channel characteristic information $q_{k,t}$ is obtained after processing the channel estimation information $h_{k,t}$ by the first sub-network at the UE side, in which the dimension of the channel characteristic information $q_{k,t}$ is lower than the dimension of the channel estimation information $h_{k,t}$. As can be seen, in embodiments of the disclosure, the UE compresses the acquired channel state information into low-dimensional channel characteristic information via the first sub-network and send it to the base station along with the compression rate parameter, and the base station determines the precoding matrixes based on the channel characteristic information $q_{k,t}$ and the compression rate parameter by means of the second sub-network. Given that the information transmitted between the UE and the base station is low-dimensional, the transmission complexity is low and the transmission efficiency is high, thereby providing a simple and efficient precoding matrix determination method with low overhead under limited feedback.

Embodiments of the disclosure also have the following beneficial effects.

(1) The precoding matrix determination network in the above precoding matrix determination methods consists of the first sub-network for performing channel compression reconstruction and the second sub-network for determining the precoding matrixes. Starting from the spatiotemporal two-dimensional correlation of the channel, with the optimization objective of maximizing the user and the rate at all time, the channel compression and precoding matrixes are optimized jointly, to efficiently determine the hybrid precoding matrix under limited feedback of the UE.

(2) The first sub-network consists of the first convolutional neural network and the first LSTM, extracting the spatial and temporal features of the channel and compressing the acquired channel state information into low-dimensional channel characteristic information through the residual cascade design of the first convolutional neural network and the first LSTM, thereby reducing the complexity of the network.

(3) The second sub-network consists of parallel first and second network modules, both of which are composed of LSTMs and residual neural networks. The LSTMs and residual neural networks are cascaded in a residual-like network manner, which integrates the channel reconstruction process and the pre-coding matrix computation process to achieve a lightweight network.

(4) The precoding matrix determination network is trained at the base station side. After completing the training, the network parameters corresponding to each trained analog sub-network are transmitted to the corresponding UE in a distributed manner, and thus it is ensured that the UE may deploy a plurality of first sub-networks with different compression rates in the UE according to the received network parameters, so as to subsequently utilize the deployed first sub-networks to process the channel state information to obtain low-dimensional channel characteristic information. The channel characteristic information and the compression rate parameters of the first sub-networks are sent to the base station, so that the base station may determine the precoding matrixes, thereby ensuring the successful determination of the precoding matrixes.

(5) In the process of determining the precoding matrixes using the above-mentioned precoding matrix determination methods, the first and second sub-networks may flexibly adjust and select networks with different compression rates based on the current precoding performance, thereby achieving a balance between performance and limited feedback.

Additional aspects and advantages of the disclosure will be given in part in the following descriptions, become apparent in part from the following descriptions, or be learned from the practice of the disclosure.

## BRIEF DESCRIPTION OF THE DRAWINGS

Above and/or additional aspects and advantages of the disclosure will become apparent and more readily appreciated from the following descriptions made with reference to the accompanying drawings, in which:

FIG. 1a is a flowchart illustrating a precoding matrix determination method according to an embodiment of the disclosure.
FIG. 1b is a schematic diagram illustrating a first sub-network according to an embodiment of the disclosure.
FIG. 1c is a schematic diagram illustrating a second sub-network according to an embodiment of the disclosure.
FIG. 2a is a flowchart illustrating a precoding matrix determination method according to an embodiment of the disclosure.
FIG. 2b is a schematic diagram illustrating a precoding matrix determination network according to an embodiment of the disclosure.
FIG. 3 is a flowchart illustrating a precoding matrix determination method according to an embodiment of the disclosure.
FIG. 4 is a flowchart illustrating a precoding matrix determination method according to an embodiment of the disclosure.
FIG. 5 is a flowchart illustrating a precoding matrix determination method according to an embodiment of the disclosure.

FIG. 6 is a schematic diagram illustrating a precoding matrix determination apparatus according to an embodiment of the disclosure.

FIG. 7 is a schematic diagram illustrating a precoding matrix determination apparatus according to an embodiment of the disclosure.

FIG. 8 is a block diagram illustrating a user equipment according to an embodiment of the disclosure.

FIG. 9 is a block diagram illustrating a network side device according to an embodiment of the disclosure.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is also understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

Embodiments of the disclosure are described in detail below, and examples of which are illustrated in the accompanying drawings, in which the same or similar symbols indicate the same or similar elements. The embodiments described below with reference to the accompanying drawings are exemplary and are intended to be used to explain the disclosure and are not to be construed as limiting the disclosure.

A precoding matrix determination method and apparatus/storage medium/device are described in detail below with reference to the accompanying drawings.

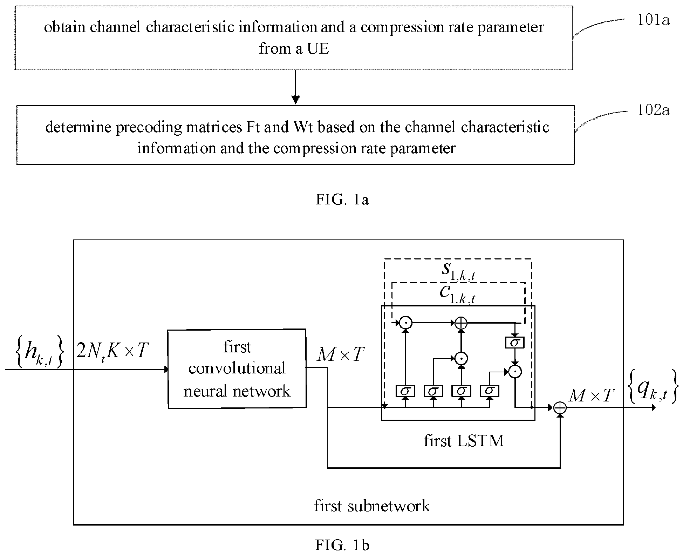

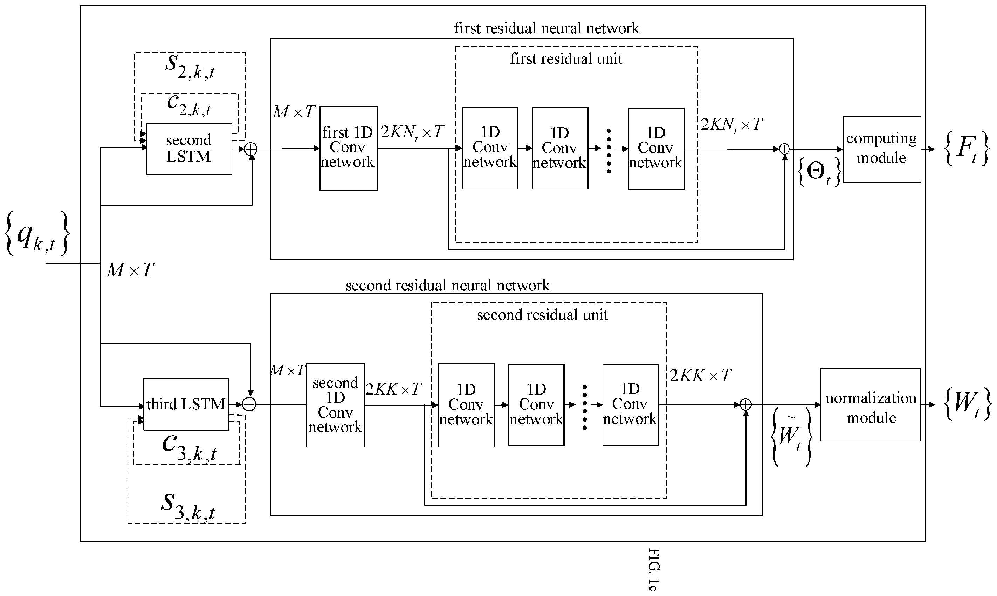

FIG. 1a is a flowchart illustrating a precoding matrix determination method according to an embodiment of the disclosure. The method is performed by a base station. As illustrated in FIG. 1, the precoding matrix determination method includes the following steps.

At step 101a, channel characteristic information $q_{k,t}$ and a compression rate parameter $\gamma$ are obtained from a user equipment (UE).

It is noteworthy that in an embodiment of the disclosure, the UE may be a device that provides voice and/or data connectivity to a user. The UE may communicate with one or more core networks via a Radio Access Network (RAN). The UE may be an Internet of Things (IoT) UE, such as a sensor device, a cell phone (or "cellular" phone), and a computer with the IoT UE. For example, the UE may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, or a user agent. Alternatively, the UE may be an unmanned aerial vehicle device. Alternatively, the UE may be an in-vehicle device, for example, an electronic control unit (ECU) having a wireless communication function, or a wireless UE external to the ECU. Alternatively, the UE can also be a roadside device, for example, a street light, a signal light, or other roadside devices having wireless communication function.

In an embodiment of the disclosure, the channel characteristic information $q_{k,t}$ is obtained after processing channel estimation information $h_{k,t}$ by a first sub-network at the UE side, in which a dimension of the channel characteristic information $q_{k,t}$ is lower than a dimension of the channel estimation information $h_{k,t}$. The channel estimation information $h_{k,t}$ may specifically be downlink channel estimation information determined by the UE through a common channel estimation method, which is an existing channel estimation method. A detailed description of the common channel estimation method may be referred to the relevant introduction in the related art, which will not be repeated in embodiments of the disclosure. In the above, k is used to indicate the kth UE and t is used to indicate a timestamp. On the basis, the channel estimation information $h_{k,t}$ is downlink channel estimation information of the k$^{th}$ UE at the t$^{th}$ moment, and the channel characteristic information $q_{k,t}$ is channel characteristic information of the k$^{th}$ UE at the t$^{th}$ moment.

In an embodiment of the disclosure, the compression rate parameter γ described above is a compression rate of the first sub-network.

In the following, the first sub-network described above is described in detail.

In an embodiment of the disclosure, FIG. 1b is a schematic diagram illustrating a first sub-network according to an embodiment of the disclosure. As illustrated in FIG. 1b, in an embodiment of the disclosure, the first sub-network (e.g., CHNet) may include a first convolutional neural network and a first long short term memory (LSTM). The first convolutional neural network and the first LSTM are connected in a residual-like network manner, and the first convolutional neural network may be used to extract spatial features of the channel, and the first LSTM is used to extract temporal features of the channel.

In the following, the process of processing information by the first convolutional neural network and the first LSTM in the first sub-network is described in detail.

As illustrated in FIG. 1b, it may be seen that the channel estimation information $h_{k,t}$ may be input to the first sub-network and processed by the first convolutional neural network and the first LSTM in the first sub-network to obtain the channel characteristic information $q_{k,t}$.

In an embodiment of the disclosure, as illustrated in FIG. 1, the channel estimation information $h_{k,t}$ needs to be multiplied by $2 \times N_t \times K \times T$ first for reconstruction before inputting into the first convolutional neural network, in which $N_t$ is a number of antennas at the base station side, K is a total number of UEs, and T is a total number of timestamps. On the basis, assuming that there are N sets of channel estimation information $h_{k,t}$ included, the channel estimation information $h_{k,t}$ may be reconstructed into an $N \times 2 \times N_t \times K \times T$ matrix by multiplying it by $2 \times N_t \times K \times T$ before inputting into the first convolutional neural network. Afterwards, the $N \times 2 \times N_t \times K \times T$ matrix is input to the first convolutional neural network to perform a convolution operation.

In an embodiment of the disclosure, the first convolutional neural network may be a one-dimensional convolutional neural network. After inputting the $N \times 2 \times N_t \times K \times T$ matrix to the first convolutional neural network, the first convolutional neural network may perform a convolution operation on the $N \times 2 \times N_t \times K \times T$ matrix. The convolution operation of the first convolutional neural network may be:

$$y_{d,i,j} = \sum_c \sum_h \mathbf{W}_{d,c,h} \mathbf{x}_{c,i \times s+h} + \mathbf{b}_d \text{ ,}$$

where $y_{d,i,j}$ is the $(d,i,j)^{th}$ element in a matrix y obtained after the convolution operation of the first convolutional neural network; $\mathbf{W}_{d,c,h}$ is the $(d,c,h)^{th}$ element in a convolutional kernel weight matrix W of the first convolutional neural network; $\mathbf{b}_d$ is the dth element in a convolutional kernel bias $\mathbf{b}$ of the first convolutional neural network; $\mathbf{x}_{c,i \times s+h}$ is the $(c, i \times s+h)$th element of an input x of the first convolutional neural network after zero padding; and s is a convolutional step size of the first convolutional neural network (e.g., the convolutional step size may be 1). The convolution kernel of the first convolutional neural network may be $d_i \times c_i \times 3$, which satisfies the constraint of $d_{i-1} = c_i$. It is noteworthy that the above "zero padding" may be specifically adding 0 to the periphery of the input x of the first convolutional neural network to obtain a matrix x'. The matrix x' should satisfy a requirement that the size of a matrix y obtained after performing the convolution operation on the matrix x' by the first convolutional neural network is the same as the size of the input x of the first convolutional neural network. It is noteworthy that the individual convolutional neural networks in the following contents also need to perform zero padding on the inputs. In an embodiment of the disclosure, the same zero padding strategy is used for all convolutional layers of all convolutional neural networks.

The activation function of the convolutional layer in the first convolutional neural network described above is the Leakyrelu function, which is defined as:

$$f_i(\mathrm{x}) = \mathrm{LeakyReLU}(x, 0.3) = \begin{cases} -0.3 * x, & x < 0 \\ x, & x \geq 0 \end{cases},$$

where x is an output after the convolution operation of the first convolutional neural network (i.e., the above-described matrix y obtained after the convolution operation of the first convolutional neural network), and $f_i(\mathrm{x})$ is an output of the first convolutional neural network.

As may be seen from the above, after inputting the channel estimation information $h_{k,t}$ into the first convolutional neural network, the first convolutional neural network carries out a convolutional activation operation sequentially to obtain an output $f_i(\mathrm{x})$ of the first convolutional neural network.

It is noteworthy that the dimension of the output of the above-described first convolutional network is lower than the dimension of the input (i.e., the channel estimation information $h_{k,t}$) of the first convolutional network. In detail, in an embodiment of the disclosure, the above-described first convolutional neural network may compress the channel estimation information $h_{k,t}$ at the moment of t into a low-dimension matrix using the sparsity characteristic of the millimeter-wave channel while taking into account the temporal correlation of the channel, so that the matrix size of the output of the first convolutional neural network is smaller than the matrix size of the channel estimation information $h_{k,t}$,

thereby reducing the computational complexity.

In detail, in an embodiment of the disclosure, the relation between the output of the first convolutional neural network and the matrix size of the channel estimation information $h_{k,t}$ is provided as follows. If the matrix size of the channel estimation information $h_{k,t}$ is $N \times 2 \times N_t \times K \times T$, the matrix size of the output obtained after the first convolutional neural network may be $N \times M \times T$. M is related to the compression rate y of the first sub-network, $\gamma = M/(N_t \times K \times 2)$.

For example, if the compression rate of the first sub-network y=1/32, Nt=256 and K=1, then M=16.

As illustrated in FIG. 1b, in an embodiment of the disclosure, the output of the first convolutional neural network may be used as the input of the first LSTM. The first LSTM processes the output of the first convolutional neural network to obtain an output of the first LSTM, and then adds the output of the first LSTM with the output of the first convolutional neural network to obtain the channel characteristic information $q_{k,t}$.

As may be seen, in an embodiment of the disclosure, the first convolutional neural network not only extracts the spatial features of the channel, but also preprocesses the data inputted to the first LSTM, to greatly reduce the dimension of the data inputted into the first LSTM network, thereby effectively reducing the computational complexity.

The first LSTM is described in detail below.

After inputting the output (i. e., a matrix of size $N \times M \times T$) of the first convolutional neural network to the first LSTM, the first LTSM needs to convert the matrix whose size is $N \times M \times T$ for the first time to obtain a first conversion matrix of size $N \times T \times M$, and then processes the first conversion matrix to obtain a processed matrix of size $N \times T \times M$. Afterwards, the first LTSM converts the processed matrix for the second time to obtain an LTSM output matrix of size $N \times M \times T$, and then adds the LTSM output matrix with the output matrix of the first convolutional neural network to obtain the channel characteristic information $q_{k,t}$. The channel characteristic information $q_{k,t}$ is of size $N \times M \times T$.

The above first LSTM needs to use hidden layer information $\mathbf{s}_{1,k,t}$ of the first LSTM and its own state information $\mathbf{c}_{1,k,t}$ when processing the matrix. It is noteworthy that the values of $\mathbf{s}_{1,k,t}$ and $\mathbf{c}_{1,k,t}$ vary with the inputs of the first sub-network. In detail, the values of $\mathbf{s}_{1,1,1}$ and $\mathbf{c}_{1,1,1}$ used when the channel estimation information $h_{1,1}$ is input to the first sub-network are different from the values of $\mathbf{s}_{1,1,2}$ and $\mathbf{c}_{1,1,2}$ used when the channel estimation information $h_{1,2}$ is input to the first sub-network, which ensures that the values of $\mathbf{s}_{1,k,t}$ and $\mathbf{c}_{1,k,t}$ correspond to the input of the first sub-network, thereby ensuring processing accuracy.

In addition, it is noteworthy that with reference to the structure of the first LSTM illustrated in FIG. 1b, the first LSTM adopted by embodiments of the disclosure is a common LSTM model in the related art. On the basis, the specific method of processing the input by the first LSTM may be described in the description of the related art, which will not be repeated in embodiments of the disclosure.

As may be seen from the above contents, the channel characteristic information $q_{k,t}$ is low-dimensional information obtained by the first sub-network deployed on the UE side after processing the channel estimation information $h_{k,t}$.

At step 102a, precoding matrices Ft and Wt are determined based on the compression rate parameter y and the channel characteristic information $q_{k,t}$.

In an embodiment of the disclosure, the method of determining the precoding matrices Ft and Wt based on the compression rate parameter y and the channel characteristic information $q_{k,t}$ includes: determining a second sub-network (PreNet) corresponding to the compression rate parameter $\gamma$, and inputting the channel characteristic information $q_{k,t}$ into the second sub-network to output the precoding matrices Ft and Wt.

It is noteworthy that in an embodiment of the disclosure, a plurality of second sub-networks are deployed at the base station side, and the plurality of second sub-networks have different compression rates. The above compression rate parameter y is the compression rate of the first sub-network. Corresponding to different compression rate parameters y (i.e., different compression rates of the first sub-network used for obtaining the channel characteristic information $q_{k,t}$), different second sub-networks are used for obtaining the pre-coding matrices Ft and Wt based on the channel characteristic information $q_{k,t}$. For example, assuming that the compression rate parameter y is 1/16 (i.e., the compression rate of the first sub-network used to obtain the channel characteristic information $q_{k,t}$ is 1/16), the second sub-network with a compression rate of 1/32 is used for obtaining the pre-coding matrices Ft and Wt based on the channel characteristic information $q_{k,t}$.

FIG. 1c is a schematic diagram illustrating a second sub-network according to an embodiment of the disclosure. As illustrated in FIG. 1c, the second sub-network includes a first network module and a second network module that are in parallel.

The above first network module is described in detail below.

In an embodiment of the disclosure, the first network module includes a second LSTM, a first residual neural network, and a computing module connected in sequence.

In an embodiment of the disclosure, the second LSTM has the same structure as the above-described first LSTM, which will not be repeated in embodiments of the disclosure. After obtaining the channel characteristic information $q_{k,t}$ from the UE, the base station may input the channel characteristic information $q_{k,t}$ into the second LSTM to obtain an output of the second LSTM, and input the output of the second LSTM into the first residual neural network. The matrix size of the output of the second LSTM is the same as the matrix size of the channel characteristic information $q_{k,t}$, both of which are N×M×T.

In an embodiment of the disclosure, after obtaining the output of the second LSTM, the first residual neural network processes the output of the second LSTM to obtain the output of the first residual neural network (i.e., the phase shifter angle $\Theta_t$).

In detail, in an embodiment of the disclosure, the first residual neural network includes a first one-dimensional convolutional network and a first residual unit consisting of n convolutional neural networks, n being a positive integer (e.g., 4). The first one-dimensional convolutional network and the first residual unit are connected in a residual network-like manner. The structure of the first one-dimensional convolutional network is the same as the structure of the first convolutional network described above, which will not be repeated in embodiments of the disclosure. The first residual unit may perform a residual operation, which is defined as:

$$y = f_n(W_n f_{n-1}(W_{n-1} f_{n-2}(\dots f_1(W_1 x + b_1) \dots) + b_{n-1}) + b_n + x),$$

where y is an output of the first residual unit, x is an input of the first residual unit, $W_i$ and $b_i$ are a weight and a bias of the intermediate layer of convolutional network of the first residual unit, and $f_i(\cdot)$ is an activation function of the intermediate-layer convolutional network of the first residual unit. The activation function may be a LeakyReLU function, and the description of the LeakyReLU function may be referred to the above description of the embodiments, which will not be repeated in embodiments of the disclosure.

It is noteworthy that the matrix size of the output of the last-layer convolutional network in the first residual unit should be the same as the matrix size of the input of the first residual unit, and the matrix size of the output of the intermediate network of the first residual unit is adjustable.

In combination with the above contents and FIG. 1c, it may be seen that in an embodiment of the disclosure, the process in which the first residual neural network processes the output of the second LSTM to obtain the output of the first residual neural network (i.e., the phase shifter angle $\Theta_t$) mainly includes the following steps. The output of the second LSTM is subjected to matrix expansion before inputting to the first convolutional neural network, to obtain the expanded matrix by expanding the matrix size from N×M×T to N×2×$N_t$×K×T. The first one-dimensional convolutional network in the first residual neural network performs a convolution activation operation on the expanded matrix to obtain the output of the first one-dimensional convolutional network, and inputs the output of the first one-dimensional convolutional network to the first residual unit, so that the first residual unit performs a residual operation on the output of the first one-dimensional convolutional network to obtain an output of the first residual unit. The output of the first residual unit is added with the output of the first one-dimensional convolutional network to obtain the output of the first residual neural network (i.e., the phase shifter angle $\Theta_t$). The phase shifter angle $\Theta_t$ is input to the computing module.

In an embodiment of the disclosure, after obtaining the phase shifter angle $\Theta_t$ output by the first residual neural network, the computing module may compute an analog precoding matrix Ft based on the phase shifter angle $\Theta_t$. The computing module computes the precoding matrix Ft based on the phase shifter angle $\Theta_t$ via the following equation:

$$F_t = \frac{exp(j\Theta_t)}{\sqrt{N_t}}.$$

As may be seen from the above, the above-described first network module processes the channel characteristic information $q_{k,t}$ to obtain an analog precoding matrix Ft.

The second network module is described in detail below.

In an embodiment of the disclosure, the second network module includes a third LSTM, a second residual neural network, and a normalization module connected in sequence, and an input end of the normalization module is connected to an output end of the computing module in the first network module.

In an embodiment of the disclosure, the third LSTM has the same structure as the second LSTM, which will not be repeated in embodiments of the disclosure. After obtaining the channel characteristic information $q_{k,t}$ from the UE, the base station may input the channel characteristic information $q_{k,t}$ into the third LSTM to obtain an output of the third LSTM, and input the output of the third LSTM into the second residual neural network. The matrix size of the output of the third LSTM is the same as the matrix size of the channel characteristic information $q_{k,t}$, both of which are N×M×T.

In an embodiment of the disclosure, after obtaining the output of the third LSTM, the second residual neural network may process the output of the third LSTM to obtain the output of the second residual neural network (i.e., $\tilde{W}_t$).

In detail, in an embodiment of the disclosure, the second residual neural network may include a second one-dimensional convolutional network and a second residual unit consisting of n convolutional neural networks, n being a positive integer (e.g., n may be 4). The second one-dimensional convolutional network and the second residual unit are connected in a residual-like network manner. The structure of the second one-dimensional convolutional network is the same as the structure of the above-described first convolutional network, which will not be repeated in embodiments of the disclosure. The second residual unit operates in the same manner as the first residual unit described above, which will not be repeated in embodiments of the disclosure.

It is noteworthy that the matrix size of the output of the last-layer convolutional network in the second residual unit should be the same as the matrix size of the input of the second residual unit, and the matrix size of the output of the intermediate network of the second residual unit is adjustable.

In combination with the above contents and FIG. 1c, it may be seen that in an embodiment of the disclosure, the process in which the second residual neural network processes the output of the third LSTM to obtain the output (i.e., $\tilde{W}_t$) of the second residual neural network mainly includes the following steps. The output of the third LSTM is subjected to matrix expansion to expand the matrix size from N×M×T to N×2×K×K×T to obtain the expanded matrix before inputting to the second convolutional neural network. The second one-dimensional convolutional network in the second residual neural network performs a convolution activation operation on the expanded matrix to obtain an output of the second one-dimensional convolutional network, and inputs the output of the second one-dimensional convolutional network to a second residual unit, so that the second residual unit performs a residual operation on the output of the second one-dimensional convolutional network to obtain an output of the second residual unit. The output of the second residual unit is added with the output of the second one-dimensional convolutional network to obtain the output (i.e., $\tilde{W}_t$) of the second residual neural network, which is input to the normalization module.

In an embodiment of the disclosure, an input end of the normalization module is connected to an output end of the computing module. After obtaining the $\tilde{W}_t$ outputted by the second residual neural network, the normalization module may calculate the digital precoding matrix Wt based on the $\tilde{W}_t$ and the analog precoding matrix Ft. The normalization module calculates the digital precoding matrix Wt based on the $\tilde{W}_t$ and the analog precoding matrix Ft via the following equation:

$$\mathbf{W}_t = \frac{\sqrt{K}}{\left\| \mathbf{F}_t \widetilde{\mathbf{W}}_t \right\|_F} \widetilde{\mathbf{W}}_t.$$

As may be seen from the above, the first network module processes the channel characteristic information $q_{k,t}$ to obtain the digital precoding matrix Wt.

As may be seen from the above, in an embodiment of the disclosure, the first network module and the second network module in the second sub-network described above have similar structures but different corresponding matrix sizes. The first network module and the second network module are used to compute an analog pre-coding matrix and a digital pre-coding matrix respectively, to realize the implicit computation of hybrid pre-coding matrix. The second sub-network integrates the channel reconstruction process and the precoding matrix computation process together to achieve a lightweight network.

In conclusion, in the precoding matrix determination method according to embodiments of the disclosure, the base station obtains the compression rate parameter y and the channel characteristic information $q_{k,t}$ via the first sub-network by the UE, in which k is used to indicate the kth UE and t is used to indicate a timestamp. The precoding matrices Ft and Wt are determined via the second sub-network based on the compression rate parameter y and the channel characteristic information $q_{k,t}$. In embodiments of the disclosure, the channel characteristic information $q_{k,t}$ is obtained after processing the channel estimation information $h_{k,t}$ by the first sub-network at the UE side, in which the dimension of the channel characteristic information $q_{k,t}$ is lower than the dimension of the channel estimation information $h_{k,t}$. As may be seen, in embodiments of the disclosure, the UE compresses the acquired channel state information into the low-dimensional channel characteristic information via the first sub-network and send the low-dimensional channel characteristic information to the base station along with the compression rate parameter, and the base station determines the precoding matrixes based on the channel characteristic information $q_{k,t}$ and the compression rate parameter by means of the second sub-network. Given that low-dimensional information is transmitted between the UE and the base station, the transmission complexity is low and the transmission efficiency is high, thereby providing a simple and efficient precoding matrix determination method with low overhead under limited feedback.

In an embodiment of the disclosure, it is often necessary to train the first sub-network and the second sub-network before using the first sub-network and the second sub-network to obtain the hybrid precoding matrixes. The process for training the first sub-network and the second sub-network is described in detail.

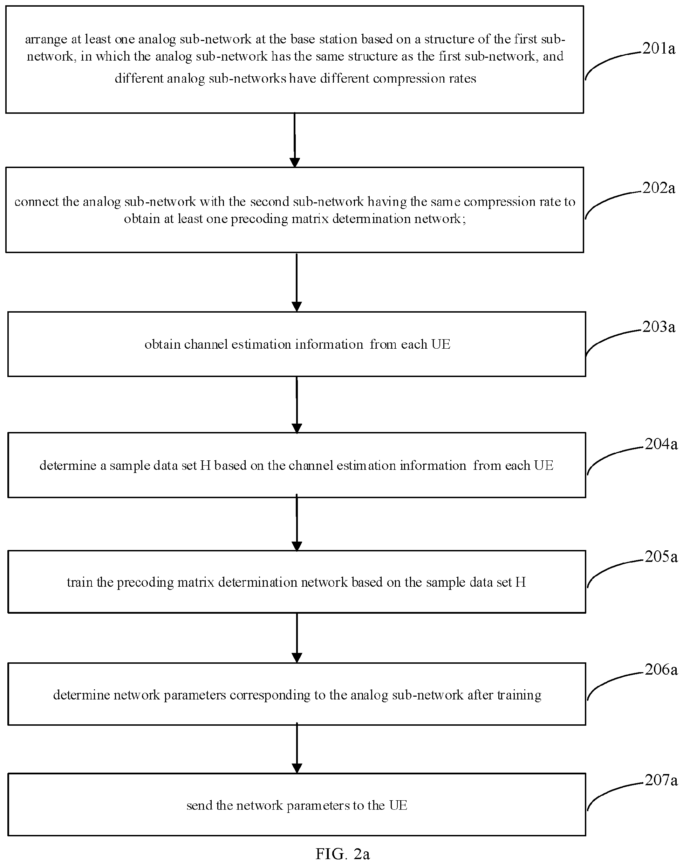

FIG. 2a is a flowchart illustrating a precoding matrix determination method according to an embodiment of the disclosure. The method is performed by a base station. As illustrated in FIG. 2a, the method includes the following steps.

At step 201a, at least one analog sub-network is arranged at the base station side based on a structure of the first sub-network, in which the analog sub-network has the same structure as the first sub-network, and different analog sub-networks have different compression rates.

The introduction of the first sub-network is described with reference to the embodiments described above, which will not be repeated in embodiments of the disclosure.

At step 202a, the analog sub-network is connected with a second sub-network having the same compression rate to obtain at least one precoding matrix determination network.

In an embodiment of the disclosure, the base station may include at least one second sub-network, and different second sub-networks have different compression rates.

In an embodiment of the disclosure, the precoding matrix determination network may be obtained by associating the analog sub-network with the second sub-network, for determining the hybrid precoding. The analog sub-networks with different compression rates correspond to second sub-networks with different compression rates. For example, an analog sub-network with a compression rate of 1/16 is associated with a second sub-network with a compression rate of 1/32 to obtain the precoding matrix determination network. Moreover, the precoding performance may vary for different precoding matrix determination networks.

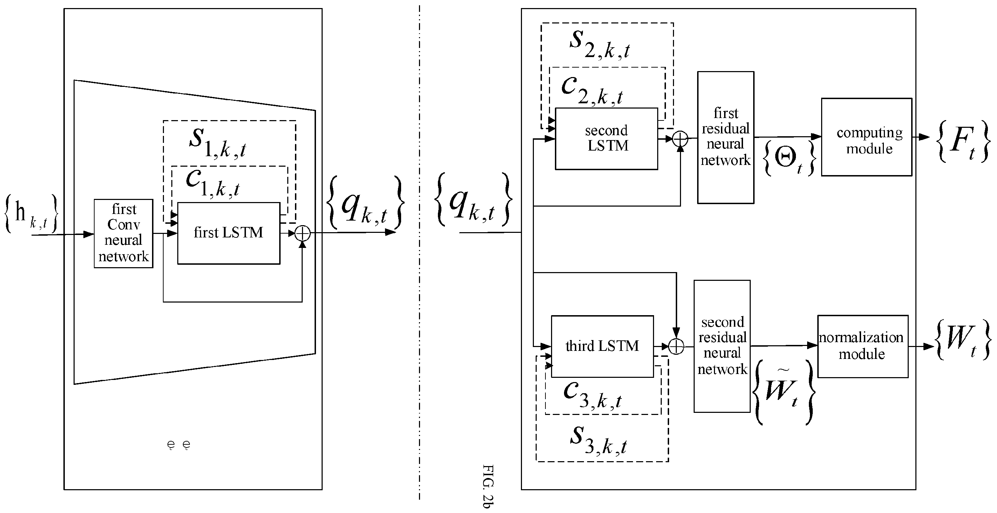

For example, FIG. 2b is a schematic diagram illustrating a precoding matrix determination network according to an embodiment of the disclosure.

At step 203a, channel estimation information $h_{k,t}$ is obtained from each UE.

The introduction of the channel estimation information $h_{k,t}$ may be described with reference to the above embodiments, which will not be repeated in embodiments of the disclosure. In an embodiment of the disclosure, the channel estimation information $h_{k,t}$ may be, for example, a channel state information (CSI) matrix.

For example, in an embodiment of the disclosure, in a downlink of a point-to-point multiple-in multiple-out orthogonal frequency division multiplexing (MIMO-OFDM) system, assuming that 256 antennas are configured at a half wavelength interval at the base station side, and a single antenna is configured at the UE side, i.e., Nt=256, and K = 1 (i.e., the number is 1 for the UE), 1024 ($N_c$ = 1024) subcarriers are adopted to obtain 5000 sets of channel estimation information $h_{k,t}$ from one UE in scenarios, e.g., in a 2.4GHz outdoor microcell scenario. Each set of samples includes relevant channel estimation information $h_{k,t}$ at 5 timestamps (T=5), i.e., $h_{k,t} = \{\mathbf{h}_{1,1}, \ldots, \mathbf{h}_{1,5}\}$. The channel estimation information $h_{1,t}$ is subjected to an imaginary-real decomposition, i.e.,

$$\mathbf{h}_{1,t} = \mathbf{h}_{1,t}^{\mathrm{re}} + j \times \mathbf{h}_{1,t}^{im}$$

, where $j^2$ = -1. For 5000 sets of channel estimation information, $\left\{\mathbf{h}_{1,1}^{\mathrm{re}}, \mathbf{h}_{1,1}^{im}, \ldots, \mathbf{h}_{1,5}^{\mathrm{re}}, \mathbf{h}_{1,5}^{im}\right\}_i$, $i$ = 1, ... , 5000.

At step 204a, a sample data set H is determined based on the channel estimation information $h_{k,t}$ from each UE.

In an embodiment of the disclosure, the method of determining a sample data set H based on the channel estimation information $h_{k,t}$ from each UE includes the sample data set $\mathbf{H} = \{\mathbf{H}_1, \ldots, \mathbf{H}_T\}$, in which

$$\mathbf{H}_t = \left\{\mathbf{h}_{1,t}^{\mathrm{H}}, \ldots, \mathbf{h}_{K,t}^{\mathrm{H}}\right\}^{\mathrm{H}}$$

$\mathbf{h}_{k,t} \in C^{N_t \times 1}$, $\mathbf{h}_{k,t}$ is the channel estimation information reported by each UE. K is a total number of UEs, k is the kth UE, k=1, 2, 3 ....... K, $N_t$ is the number of BS antennas, T is a total number of timestamps, t is a timestamp, t==1, 2, 3....... T.

On the basis, assuming that K=1, T=5, and 5000 sets of channel estimation information are obtained from one UE in the step 203a, i.e., $\left\{\mathbf{h}_{1,1}^{\mathrm{re}}, \mathbf{h}_{1,1}^{im}, \ldots, \mathbf{h}_{1,5}^{\mathrm{re}}, \mathbf{h}_{1,5}^{im}\right\}_i$, $i$ = 1, ... , 5000. At this time, 5000 sample data sets H are obtained, and each sample data set H = $\{\mathbf{H}_1, \ldots, \mathbf{H}_5\}$, $\mathbf{H}_1 = \left\{\mathbf{h}_{1,1}^{\mathrm{H}}\right\}^{\mathrm{H}}$, $\mathbf{H}_2 = \left\{\mathbf{h}_{1,2}^{\mathrm{H}}\right\}^{\mathrm{H}}$, $\mathbf{H}_3 = \left\{\mathbf{h}_{1,3}^{\mathrm{H}}\right\}^{\mathrm{H}}$, $\mathbf{H}_4 = \left\{\mathbf{h}_{1,4}^{\mathrm{H}}\right\}^{\mathrm{H}}$, and $\mathbf{H}_5 = \left\{\mathbf{h}_{1,5}^{\mathrm{H}}\right\}^{\mathrm{H}}$, where $\mathbf{h}_{1,t} = \mathbf{h}_{1,t}^{\mathrm{re}} + j \times \mathbf{h}_{1,t}^{im}$ $j^2$ = -1.

The 5000 sample data sets H may include, e.g., 3500 training sample sets (70% of the total), 1000 validation sample sets (20% of the total), and 500 test sample sets (10% of the total), and all these sets are used as training data of the pre-coding matrix determination network.

At step 205a, the precoding matrix determination network is trained based on the sample data set H.

In an embodiment of the disclosure, in training the precoding matrix determination network based on the sample data set H, the network parameters in the precoding matrix determination network are adjusted with the optimization objective of maximizing users and rates at all times, in order to achieve an efficient hybrid precoding design under limited feedback.

In detail, the loss function (Loss) may be computed by training the pre-coding matrix determination network based on the sample data set H using the method illustrated in FIGS. 1-5 above.

In an embodiment of the disclosure, the loss function (Loss) is defined as:

$$\mathrm{Loss} = -\mathrm{Rate} = -\sum_{k=1}^{K} \log_2(1 + \mathrm{SINR}_k);$$

$$\text{SINR}_k = \frac{\left|\mathbf{h}_{k,t}^H \mathbf{F}_t \mathbf{w}_{t,k}\right|^2}{1 + \sum_{j \neq k} \frac{P}{K} \left|\mathbf{h}_k^H \mathbf{F}_t \mathbf{w}_{t,j}\right|^2}$$

The above Rate may be a combined rate, and Loss may be an opposite value of the combined rate from the above equation.

In an embodiment of the disclosure, the precoding matrix determination network is trained using an end-to-end training approach, and it is determined that training of the precoding matrix determination network is completed until the loss function converges.

At step 206a, network parameters corresponding to each analog sub-network that has been trained are determined.

At step 207a, the network parameters corresponding to each analog sub-network are sent to the UE.

In an embodiment of the disclosure, after the UE receives the network parameters corresponding to each analog sub-network, the UE may deploy a plurality of first sub-networks with different compression rates at the UE based on the received network parameters, such that in determining hybrid pre-coding matrixes, the UE obtains the channel estimation information $h_{k,t}$, processes the channel state information $h_k$ using the plurality of deployed first sub-networks to obtain low-dimensional channel characteristic information $q_{k,t}$, and then sends the channel characteristic information $q_{k,t}$ and the compression rate parameter y of the first sub-network to the base station, to enable the base station to select the second sub-network with a corresponding compression rate y and process the received channel characteristic information $q_{k,t}$ to obtain the hybrid precoding matrices Ft and Wt.

In conclusion, in the precoding matrix determination method according to embodiments of the disclosure, the base station obtains the compression rate parameter y and the channel characteristic information $q_{k,t}$ via the first sub-network by the UE, in which k is used to indicate the $k^{th}$ UE and t is used to indicate a timestamp. The precoding matrices Ft and Wt are determined via the second sub-network based on the compression rate parameter y and the channel characteristic information $q_{k,t}$. In embodiments of the disclosure, the channel characteristic information $q_{k,t}$ is obtained after processing the channel estimation information $h_{k,t}$ by the first sub-network of the UE, in which a dimension of the channel characteristic information $q_{k,t}$ is lower than a dimension of the channel estimation information $h_{k,t}$. As may be seen, in embodiments of the disclosure, the UE compresses the acquired channel state information into the low-dimensional channel characteristic information via the first sub-network and send the low-dimensional channel characteristic information to the base station along with the compression rate parameter, and the base station determines the precoding matrixes based on the channel characteristic information $q_{k,t}$ and the compression rate parameter by means of the second sub-network. Given that low-dimensional information is transmitted between the UE and the base station, the transmission complexity is low and the transmission efficiency is high, thereby providing a simple and efficient precoding matrix determination method with low overhead under limited feedback.

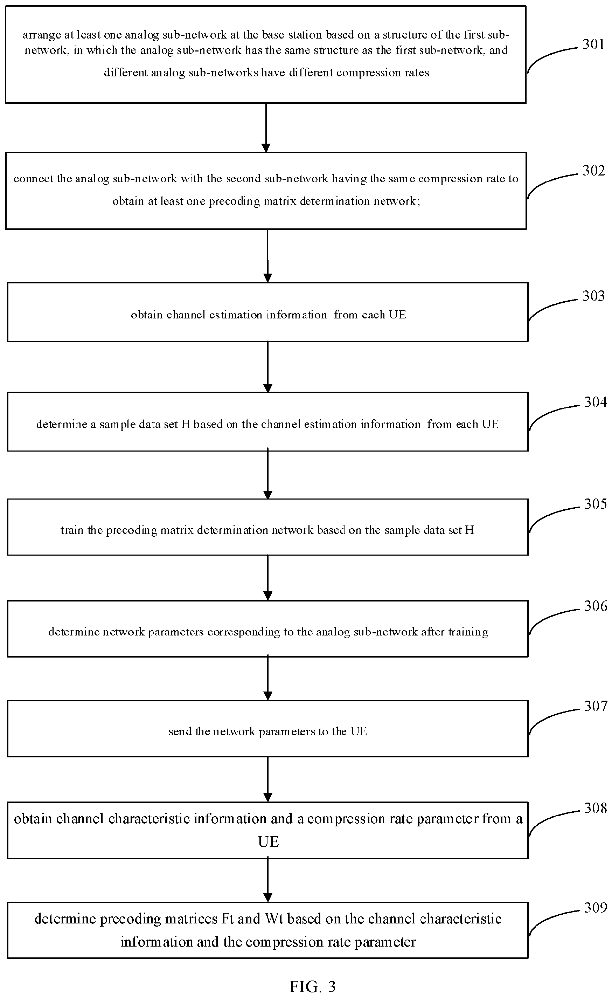

FIG. 3 is a flowchart illustrating a precoding matrix determination method according to an embodiment of the disclosure. The method is performed by a base station. As illustrated in FIG. 3, the method includes the following steps.

At step 301, at least one analog sub-network is arranged at the base station side based on a structure of the first sub-network, in which the analog sub-network has the same structure as the first sub-network, and different analog sub-networks have different compression rates.

At step 302, the analog sub-network is connected with a second sub-network to obtain at least one precoding matrix determination network, in which the analog sub-network and the second sub-network have the same compression rate.

At step 303, channel estimation information $h_{k,t}$ is obtained from each UE.

At step 304, a sample data set H is determined based on the channel estimation information $h_{k,t}$ from each UE.

At step 305, the precoding matrix determination network is trained based on the sample data set H.

At step 306, network parameters corresponding to each analog sub-network that has been trained are obtained.

At step 307, the network parameters of each analog sub-network are sent to the UE.

At step 308, channel characteristic information $q_{k,t}$ and a compression rate parameter $\gamma$ are obtained from a UE.

At step 309, precoding matrices Ft and Wt are determined based on the compression rate parameter y and the channel characteristic information $q_{k,t}$.

In an embodiment of the disclosure, the detailed description of steps 301-309 may be referred to the relevant description in the above embodiments, which will not be repeated in embodiments of the disclosure.

In conclusion, in the precoding matrix determination method according to embodiments of the disclosure, the base station obtains the compression rate parameter y and the channel characteristic information $q_{k,t}$ that are obtained via the first sub-network by the UE, in which k is used to indicate the $k^{th}$ UE and t is used to indicate a timestamp. The precoding matrices Ft and Wt are determined via the second sub-network based on the compression rate parameter y and the channel characteristic information $q_{k,t}$. In embodiments of the disclosure, the channel characteristic information $q_{k,t}$ is obtained after processing the channel estimation information $h_{k,t}$ by the first sub-network at the UE side, in which the dimension of the channel characteristic information $q_{k,t}$ is lower than the dimension of the channel estimation information $h_{k,t}$. As may be seen, in embodiments of the disclosure, the UE compresses the acquired channel state information into the low-dimensional channel characteristic information via the first sub-network and send the low-dimensional channel characteristic information to the base station along with the compression rate parameter, such that the base station determines the precoding matrixes based on the channel characteristic information $q_{k,t}$ and the compression rate parameter by means of the second sub-network. Given that the information transmitted between the UE and the base station is the low-dimensional information, the transmission complexity is low and the transmission efficiency is high, thereby providing a simple and efficient precoding matrix determination method with low overhead under limited feedback.

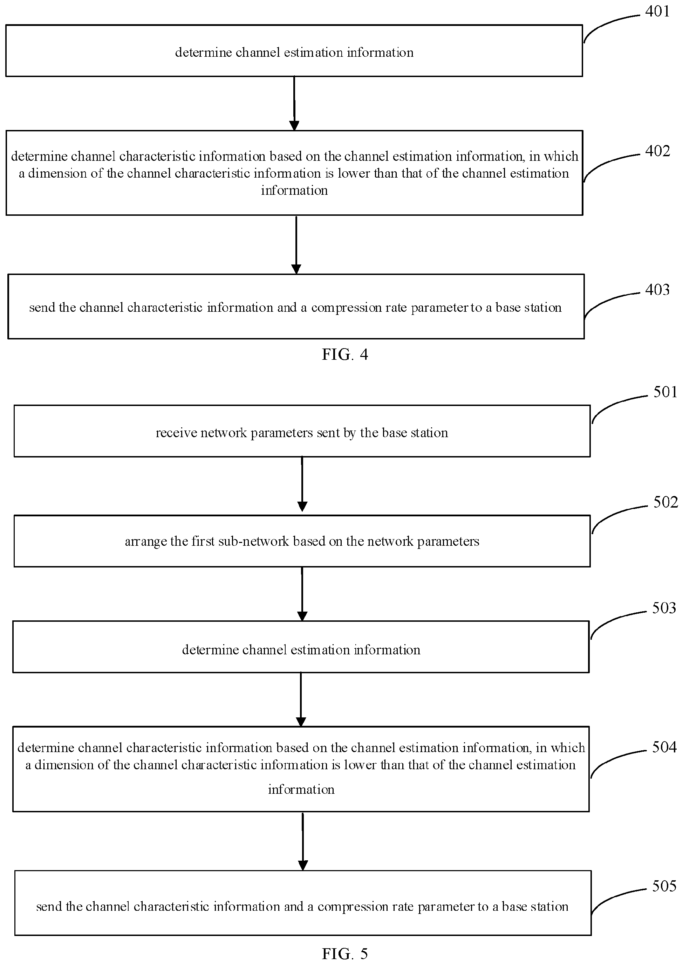

FIG. 4 is a flowchart illustrating a precoding matrix determination method according to an embodiment of the disclosure. The method is performed by a UE. As illustrated in FIG. 4, the method includes the following steps.

At step 401, channel estimation information $h_{k,t}$ is determined.

In an embodiment of the disclosure, k is used to indicate the $k^{th}$ UE and t is used to indicate a timestamp.

In an embodiment of the disclosure, the $k^{th}$ UE may obtain the downlink channel estimation information $\mathbf{h}_{k,t}$ at the time of t by a common channel estimation method.

At step 402, channel characteristic information $q_{k,t}$ is determined based on the channel estimation information $h_{k,t}$, in which a dimension of the channel characteristic information $q_{k,t}$ is lower than the dimension of the channel estimation information $h_{k,t}$.

In an embodiment of the disclosure, the method of determining the channel characteristic information $q_{k,t}$ based on the channel estimation information $h_{k,t}$ may include: inputting the channel estimation information $h_{k,t}$ into a first sub-network to output the channel characteristic information $q_{k,t}$, in which the first sub-network includes a first convolutional neural network and a first LSTM that are connected in a residual-like network manner, and the compression rate parameter y is a compression rate of the first sub-network.

A detailed description of the first sub-network may be found in the relevant descriptions in the above embodiments, which will not be repeated in embodiments of the disclosure.

At step 403, the channel characteristic information $q_{k,t}$ and a compression rate parameter $\gamma$ are sent to a base station.

In an embodiment of the disclosure, the base station receives the channel characteristic information $q_{k,t}$ and the compression rate parameter y sent by the UE, and selects a corresponding second sub-network to process the received channel characteristic information $q_{k,t}$ according to the compression rate parameter y to obtain precoding matrixes.

It is noteworthy that in an embodiment of the disclosure, a plurality of first sub-networks are deployed at the UE side, and different first sub-networks have different compression rates. On the basis, in an embodiment of the disclosure, the UE may flexibly select the first sub-network for pre-encoding according to the pre-encoding performance. In detail, the UE may first select a first sub-network with a high compression rate to determine the channel characteristic information $q_{k,t}$, and send the determined channel characteristic information $q_{k,t}$ and the compression rate parameter y of the first sub-network having the high compression rate to the base station, so that the base station selects a second sub-network corresponding to the high compression rate for pre-coding. When the UE determines that the performance of this precoding is good, the UE may select, in the next precoding, a first sub-network with a higher compression rate to determine the channel characteristic information $q_{k,t}$ and send the determined channel characteristic information $q_{k,t}$ and the compression rate parameter y of the first sub-network having the higher compression rate to the base station, so that the base station may select a second sub-network corresponding to this higher compression rate for precoding. When the UE determines that the performance of this precoding is poor, the UE may select, in the next pre-coding, a first sub-network having a lower compression rate to determine the channel characteristic information $q_{k,t}$ and send the determined channel characteristic information $q_{k,t}$ and the compression rate parameter y of the first sub-network having the lower compression rate to the base station, so that the base station may select the second sub-network corresponding to the lower compression rate for pre-coding.

In conclusion, in the precoding matrix determination method according to embodiments of the disclosure, the base station obtains the compression rate parameter y and the channel characteristic information $q_{k,t}$ that are obtained via the first sub-network by the UE, in which k is used to indicate the $k^{th}$ UE and t is used to indicate a timestamp. The precoding matrices Ft and Wt are determined via the second sub-network based on the compression rate parameter y and the channel characteristic information $q_{k,t}$. In embodiments of the disclosure, the channel characteristic information $q_{k,t}$ is obtained after processing the channel estimation information $h_{k,t}$ by the first sub-network at the UE side, in which a dimension of the channel characteristic information $q_{k,t}$ is lower than the dimension of the channel estimation information $h_{k,t}$. As may be seen, in embodiments of the disclosure, the UE compresses the acquired channel state information into the low-dimensional channel characteristic information via the first sub-network and send the low-dimensional channel characteristic information to the base station along with the compression rate parameter, such that the base station determines the precoding matrixes based on the channel characteristic information $q_{k,t}$ and the compression rate parameter by means of the second sub-network. Given that the information transmitted between the UE and the base station is the low-dimensional information, the transmission complexity is low and the transmission efficiency is high, thereby providing a simple and efficient precoding matrix determination method with low overhead under limited feedback.

FIG. 5 is a flowchart illustrating a precoding matrix determination method according to an embodiment of the disclosure. The method is performed by a UE. As illustrated in FIG. 5, the method includes the following steps.

At step 501, network parameters sent by a base station are received.

In an embodiment of the disclosure, the network parameters may include a plurality of network parameters of first convolutional neural networks corresponding to different compression rates and network parameters of the first LSTM.

At step 502, a first sub-network is deployed based on the network parameters.

At step 503, channel estimation information $h_{k,t}$ is determined, in which k is used to indicate the $k^{th}$ UE and t is used to indicate a timestamp.

At step 504, channel characteristic information $q_{k,t}$ is determined based on the channel estimation information $h_{k,t}$, in which a dimension of the channel characteristic information $q_{k,t}$ is lower than a dimension of the channel estimation information $h_{k,t}$.

At step 505, the channel characteristic information $q_{k,t}$ and a compression rate parameter $\gamma$ are sent to the base station.

In an embodiment of the disclosure, the detailed description of steps 501 -505 may be referred to the relevant description in the above embodiments, which will not be repeated in embodiments of the disclosure.

In conclusion, in the precoding matrix determination method according to embodiments of the disclosure, the base station obtains the compression rate parameter y and the channel characteristic information $q_{k,t}$ that are obtained via the first sub-network by the UE, in which k is used to indicate the $k^{th}$ UE and t is used to indicate a timestamp. The precoding matrices Ft and Wt are determined via the second sub-network based on the compression rate parameter y and the channel characteristic information $q_{k,t}$. In embodiments of the disclosure, the channel characteristic information $q_{k,t}$ is obtained after processing the channel estimation information $h_{k,t}$ by the first sub-network at the UE side, in which the dimension of the channel characteristic information $q_{k,t}$ is lower than the dimension of the channel estimation information $h_{k,t}$. As may be seen, in embodiments of the disclosure, the UE compresses the acquired channel state information into the low-dimensional channel characteristic information via the first sub-network and send the low-dimensional channel characteristic information to the base station along with the compression rate parameter, such that the base station determines the precoding matrix based on the channel characteristic information $q_{k,t}$ and the compression rate parameter by means of the second sub-network. Given that information transmitted between the UE and the base station is the low-dimensional information, the transmission complexity is low and the transmission efficiency is high, thereby providing a simple and efficient precoding matrix determination method with low overhead under limited feedback.

Embodiments of the disclosure also have the following beneficial effects.

(1) The precoding matrix determination network in the above precoding matrix determination methods consists of the first sub-network for performing channel compression reconstruction and the second sub-network for determining the precoding matrixes. Starting from the spatiotemporal two-dimensional correlation of the channel, with the optimization objective of maximizing the user and the rate at all time, the channel compression and precoding matrixes are optimized jointly, to efficiently determine the hybrid precoding matrixes under limited feedback of the UE.

(2) The first sub-network consists of the first convolutional neural network and the first LSTM, extracting the spatial and temporal features of the channel and compressing the acquired channel state information into low-dimensional channel characteristic information through the residual cascade design of the first convolutional neural network and the first LSTM, thereby reducing the complexity of the network.

(3) The second sub-network consists of parallel first and second network modules, both of which are composed of LSTMs and residual neural networks. The LSTMs and residual neural networks are cascaded in a residual-like network manner, which integrates the channel reconstruction process and the pre-coding matrix computation process to achieve a lightweight network.

(4) The precoding matrix determination network is trained at the base station side. After completing the training, the network parameters corresponding to each trained analog sub-network are transmitted to the corresponding UE in a distributed manner, and thus it is ensured that the UE may deploy a plurality of first sub-networks with different compression rates in the UE according to the received network parameters, so as to subsequently utilize the deployed first sub-networks to process the channel state information to obtain low-dimensional channel characteristic information. The channel characteristic information and the compression rate parameters of the first sub-networks are sent to the base station, so that the base station may determine the precoding matrixes, thereby ensuring the successful determination of the precoding matrixes.

(5) In the process of determining the precoding matrixes using the above-mentioned precoding matrix determination methods, the first and second sub-networks may flexibly adjust and select networks with different compression rates based on the current precoding performance, thereby achieving a balance between performance and limited feedback.

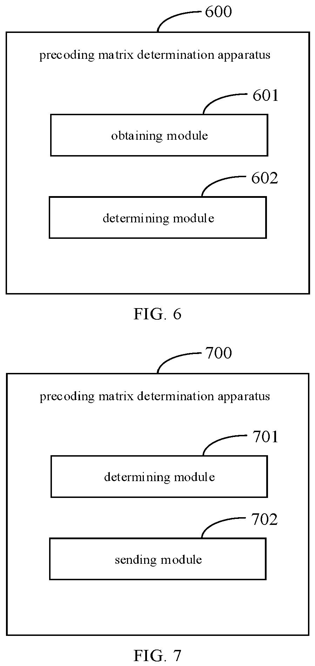

FIG. 6 is a schematic diagram illustrating a precoding matrix determination apparatus according to an embodiment of the disclosure. As illustrated in FIG. 6, the apparatus includes: an obtaining module 601 and a determining module 602.

The obtaining module 601 is configured to obtain channel characteristic information $q_{k,t}$ and a compression rate parameter $\gamma$ from a UE, in which k is used to indicate the $k^{th}$ UE and t is used to indicate a timestamp corresponding to the channel characteristic information $q_{k,t}$.

The determining module 602 is configured to determine precoding matrices Ft and Wt based on the compression rate parameter y and the channel characteristic information $q_{k,t}$.

In conclusion, in the precoding matrix determination apparatus according to embodiments of the disclosure, the base station obtains the compression rate parameter y and the channel characteristic information $q_{k,t}$ that are obtained via the first sub-network by the UE, in which k is used to indicate the $k^{th}$ UE and t is used to indicate a timestamp. The precoding matrices Ft and Wt are determined via the second sub-network based on the compression rate parameter y and the channel characteristic information $q_{k,t}$. In embodiments of the disclosure, the channel characteristic information $q_{k,t}$ is obtained after processing the channel estimation information $h_{k,t}$ by the first sub-network at the UE side, in which a dimension of the channel characteristic information $q_{k,t}$ is lower than a dimension of the channel estimation information $h_{k,t}$. As may be seen, in embodiments of the disclosure, the UE compresses the acquired channel state information into the low-dimensional channel characteristic information via the first sub-network and send the low-dimensional channel characteristic information to the base station along with the compression rate parameter, and the base station determines the precoding matrix based on the channel characteristic information $q_{k,t}$ and the compression rate parameter by means of the second sub-network. Given that the information transmitted between the UE and the base station is the low-dimensional information, the transmission complexity is low and the transmission efficiency is high, thereby providing a simple and efficient precoding matrix determination method with low overhead under limited feedback.

In an embodiment of the disclosure, the channel characteristic information $q_{k,t}$ is obtained after processing channel estimation information $h_{k,t}$ by a first sub-network at the UE side, in which the dimension of the channel characteristic information $q_{k,t}$ is lower than the dimension of the channel estimation information $h_{k,t}$, and the compression rate parameter y is a compression rate of the first sub-network; and the first sub-network includes a first convolutional neural network and a first LSTM, in which the first convolutional neural network and the first LSTM are connected in a residual-like network manner.

In an embodiment of the disclosure, the determining module 602 is further configured to:

determine a second sub-network corresponding to the compression rate parameter y; and
input the channel characteristic information $q_{k,t}$ into the second sub-network to output the precoding matrices Ft and Wt.

In an embodiment of the disclosure, the second sub-network includes a first network module and a second network module that are in parallel.

The first network module includes a second LSTM, a first residual neural network and a computing module that are connected in sequence, the first residual neural network includes a first one-dimensional convolutional network and a first residual unit consisting of n convolutional neural networks, n being a positive integer, and the first one-dimensional convolutional network and the first residual unit are connected in a residual-like network manner; in which the channel characteristic information $q_{k,t}$ is processed by the second LSTM and the first residual neural network to obtain a phase shifter angle $\Theta_t$, and the computing module is configured to calculate and output the precoding matrix Ft based on the phase shifter angle $\Theta_t$;
the second network module includes a third LSTM, a second residual neural network and a normalization module that are connected in sequence, an input end of the normalization module is connected to an output end of the computing module, the second residual neural network includes a second one-dimensional convolutional network and a second residual unit consisting of n convolutional neural networks, and the second one-dimensional convolutional network and the second residual unit are connected in a residual-like network manner; in which the channel characteristic information $q_{k,t}$ is processed by the third LSTM, the second residual neural network and the normalization module to obtain and output the precoding matrix Wt; and the matrix size corresponding to the first residual neural network is different from the matrix size of the second residual neural network.

In an embodiment of the disclosure, the base station includes at least one second sub-network, in which different second sub-networks have different compression rates.

In an embodiment of the disclosure, the apparatus is further configured to:

arrange at least one analog sub-network at the base station side based on a structure of the first sub-network, in which the analog sub-network has the same structure as the first sub-network, and different analog sub-networks have different compression rates;

connect the analog sub-network with the second sub-network to obtain at least one precoding matrix determination network, in which the analog sub-network with the second sub-network have the same compression rate;

obtain channel estimation information $h_{k,t}$ from each UE;

determine a sample data set H based on the channel estimation information $h_{k,t}$ from each UE; and

train the precoding matrix determination network based on the sample data set H.

In an embodiment of the disclosure, the apparatus is further configured to:

determine network parameters corresponding to the analog sub-network that has been trained; and

send the network parameters to the UE.

FIG. 7 is a schematic diagram illustrating a precoding matrix determination apparatus according to an embodiment of the disclosure. As illustrated in FIG. 7, the apparatus 700 includes: a determining module 701.

The determining module 701, configured to determine channel estimation information $h_{k,t}$, in which k is used to indicate the k$^{th}$ UE and t is used to indicate a timestamp corresponding to the channel estimation information $h_{k,t}$;

in which the determining module 701 is further configured to: determine channel characteristic information $q_{k,t}$ based on the channel estimation information $h_{k,t}$, in which a dimension of the channel characteristic information $q_{k,t}$ is lower than a dimension of the channel estimation information $h_{k,t}$; and

a sending module 702, configured to send the channel characteristic information $q_{k,t}$ and a compression rate parameter y to a base station.

In conclusion, in the precoding matrix determination apparatus according to embodiments of the disclosure, the base station obtains the compression rate parameter y and the channel characteristic information $q_{k,t}$ that are obtained via the first sub-network by the UE, in which k is used to indicate the kth UE and t is used to indicate a timestamp. The precoding matrices Ft and Wt are determined via the second sub-network based on the compression rate parameter y and the channel characteristic information $q_{k,t}$. In embodiments of the disclosure, the channel characteristic information $q_{k,t}$ is obtained after processing the channel estimation information $h_{k,t}$ by the first sub-network at the UE side, in which the dimension of the channel characteristic information $q_{k,t}$ is lower than the dimension of the channel estimation information $h_{k,t}$. As may be seen, in embodiments of the disclosure, the UE compresses the acquired channel state information into the low-dimensional channel characteristic information via the first sub-network and send the low-dimensional channel characteristic information to the base station along with the compression rate parameter, such that the base station determines the precoding matrix based on the channel characteristic information $q_{k,t}$ and the compression rate parameter by means of the second sub-network. Given that the information transmitted between the UE and the base station is the low-dimensional information, the transmission complexity is low and the transmission efficiency is high, thereby providing a simple and efficient precoding matrix determination method with low overhead under limited feedback.

In an embodiment of the disclosure, the determining module 701 is further configured to:

input the channel estimation information $h_{k,t}$ into a first sub-network to output the channel characteristic information $q_{k,t}$;

in which the first sub-network includes a first convolutional neural network and a first LSTM that are connected in a residual-like network manner, and the compression rate parameter y is a compression rate of the first sub-network.

In an embodiment of the disclosure, the apparatus is further configured to:

receive network parameters sent by the base station; and

arrange the first sub-network based on the network parameters.

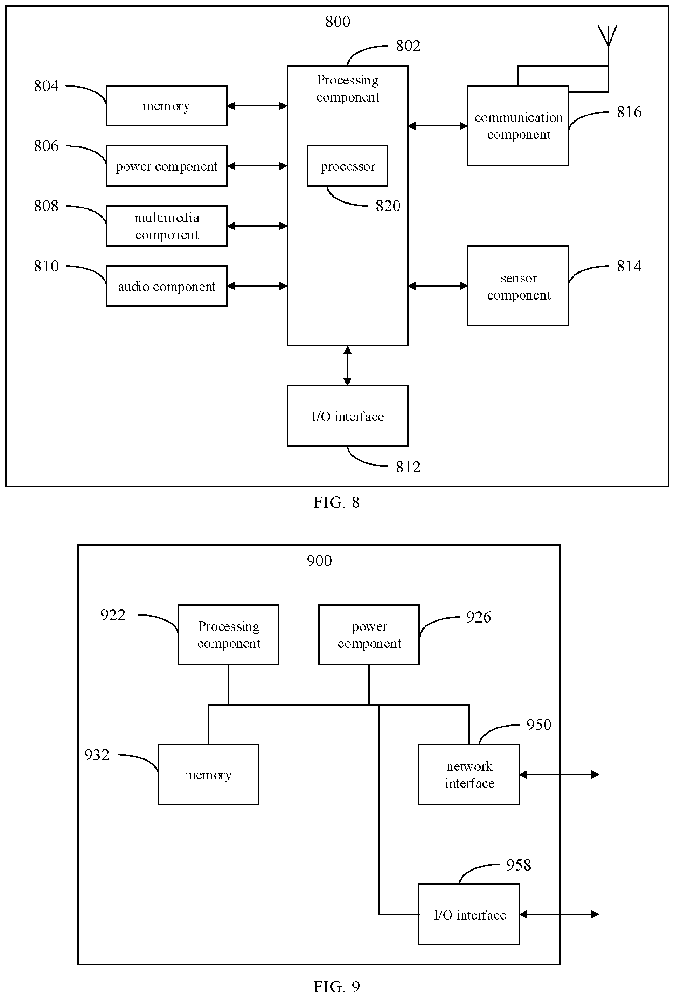

FIG. 8 is a block diagram illustrating a UE 800 according to an exemplary embodiment. For example, the UE 800 may be a mobile phone, a computer, a digital broadcasting UE, a message transceiver device, a game console, a tablet device, a medical device, a fitness device and a personal digital assistant.

As illustrated in FIG. 8, the UE 800 may include at least one of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include at least one processor 820 to execute instructions to perform all or part of the steps in the above described method. Moreover, the processing component 802 may include at least one module which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, at least one power source, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a duration and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes at least one sensor to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or a Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an embodiment, the communication component 816 receives a broadcast signal from an external broadcast management system or broadcast associated information via a broadcast channel. In an embodiment, the communication component 816 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In an exemplary embodiment, the UE 800 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described method.

FIG. 9 is a block diagram of a network side device 900 of an embodiment of the disclosure. For example, the network side device 900 may be provided as a network side device. As illustrated in FIG. 9, the network side device 900 includes a processing component 922 consisting of at least one processor, and memory resources represented by a memory 932 for storing instructions that may be executed by the processing component 922, such as applications. The applications stored in the memory 932 may include one or more modules each corresponding to a set of instructions. In addition, the processing component 922 is configured to execute the instructions to perform any of the methods described above that are performed by the network side device, for example, the method shown in FIG. 1.

The network side device 900 may also include a power component 926 configured to perform power management of the network side device 900, a wired or wireless network interface 950 configured to connect the network side device 900 to a network, and an input/output (I/O) interface 958. The network side device 900 may operate based on an operating system stored in the memory 932, such as Windows Server TM, Mac OS XTM, UnixTM, LinuxTM, FreeBSDTM, or the like.

In the above embodiments of the disclosure, the method provided by the embodiments of the disclosure are introduced from the perspectives of the network side device and the UE respectively. In order to realize each of the functions in the method provided by the above embodiments of the disclosure, the network side device and the UE may include a hardware structure and a software module to implement the above-mentioned various functions in the form of a hardware structure, a software module, or a combination of the hardware structure and the software module. A certain function may be implemented in the form of a hardware structure, a software module, or a combination of the hardware structure and the software module.

In the above-described embodiments of the disclosure, the methods provided in the embodiments of the disclosure are described from the perspectives of the network side device and the UE, respectively. In order to realize each of the functions in the method provided by the above embodiments of the disclosure, the network side device and the UE may include a hardware structure and a software module to implement the above-mentioned various functions in the form of a hardware structure, a software module, or a combination of the hardware structure and the software module. A certain function may be implemented in the form of a hardware structure, a software module, or a combination of the hardware structure and the software module.

Embodiments of the disclosure provide a communication device. The communication device may include a transceiver module and a processing module. The transceiver module may include a sending module and/or a receiving module, the sending module is used for realizing a sending function, and the receiving module is used for realizing a receiving function, and the transceiver module may realize the sending function and/or the receiving function.

The communication device may be a terminal device (e.g., the terminal device in the method embodiments described above), a device in the terminal device, or a device capable of being used together with the terminal device. Alternatively, the communication device may be a network device, or a device in the network device, or a device capable of being used together with the network device.

Embodiments of the disclosure provide another communication device. The communication device may be a network device, a terminal device (e.g., the terminal device in the method embodiments described above), or a chip, a chip system or a processor that supports the network device to realize the above-described methods, or a chip, a chip system or a processor that supports the terminal device to realize the above-described methods. The device may be used to realize the methods described in the above method embodiments with reference to the descriptions of the above-described method embodiments.

The communication device may include one or more processors. The processor may be a general purpose processor or a dedicated processor, such as, a baseband processor or a central processor. The baseband processor is used for processing communication protocols and communication data. The central processor is used for controlling the communication device (e.g., network side device, baseband chip, terminal device, terminal device chip, a central unit (CU), or a distributed unit (DU)), executing computer programs, and processing data of the computer programs.

Optionally, the communication device may further include one or more memories on which computer programs may be stored. When the processor executes the computer programs, the communication device is caused to perform the method described in the above method embodiments. Optionally, data may also be stored in the memory. The communication device and the memory may be provided separately or may be integrated together.

Optionally, the communication device may also include a transceiver and an antenna. The transceiver may be referred to as transceiver unit, transceiver machine, or transceiver circuit, for realizing the transceiver function. The transceiver may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device may also include one or more interface circuits. The interface circuits are used to receive code instructions and transmit the code instructions to the processor. The processor runs the code instructions to cause the communication device to perform the method described in the method embodiments.

When the communication device is implemented as a terminal device (e.g., the terminal device in the method embodiments described above), the processor is used to perform the method shown in any one of FIGS. 1-6.

When the communication device is implemented as a network device, the transceiver is used to perform the method shown in any of FIGS. 7-8.

In an implementation, the processor may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor may store computer programs that can be executed by the processor and may cause the communication device to perform the methods described in the method embodiments above. The computer programs may be solidified in the processor, in which case the processor may be implemented by hardware.

In an implementation, the communication device may include circuits. The circuits may implement the sending, receiving or communicating function in the preceding method embodiments. The processors and transceivers described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device, but the scope of the communication device described in the disclosure is not limited thereto, and the structure of the communication device may not be limited by FIG. 9. The communication device may be a stand-alone device or may be part of a larger device. For example, the described communication device may be:

(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

In the case where the communication device may be a chip or a chip system, the chip includes a processor and an interface. There may be one or more processors, and there may be multiple interfaces.

Optionally, the chip further includes a memory used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a system. The system includes a communication device as a terminal device (e.g., the terminal device in the above method embodiments) and a communication device as a network device in the preceding embodiments. Or, the system includes a communication device as a terminal device (e.g., the terminal device in the above method embodiments) and a communication device as a network device in the preceding embodiments.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A precoding matrix determination method, performed by a base station, comprising:

   obtaining channel characteristic information $q_{k,t}$ and a compression rate parameter $\gamma$ from a user equipment (UE), wherein k is used to indicate a $k^{th}$ UE and t is used to indicate a timestamp; and
   determining precoding matrices Ft and Wt based on the compression rate parameter y and the channel characteristic information $q_{k,t}$.

2. The method of claim 1, wherein the channel characteristic information $q_{k,t}$ is obtained after processing channel estimation information $h_{k,t}$ by a first sub-network at a UE side, wherein a dimension of the channel characteristic information $q_{k,t}$ is lower than a dimension of the channel estimation information $h_{k,t}$, and the compression rate parameter y is a compression rate of the first sub-network; and
   the first sub-network comprises a first convolutional neural network and a first long short term memory (LSTM), wherein the first convolutional neural network and the first LSTM are connected in a residual-like network manner.

3. The method of claim 2, wherein determining the precoding matrices Ft and Wt based on the compression rate parameter y and the channel characteristic information $q_{k,t}$ comprises:

   determining a second sub-network corresponding to the compression rate parameter y; and
   inputting the channel characteristic information $q_{k,t}$ into the second sub-network to output the precoding matrices Ft and Wt.

4. The method of claim 3, wherein the second sub-network comprises a first network module and a second network module that are in parallel;

   the first network module comprises a second LSTM, a first residual neural network and a computing module that are connected in sequence, the first residual neural network comprises a first one-dimensional convolutional network and a first residual unit consisting of n convolutional neural networks, n being a positive integer, and the first one-dimensional convolutional network and the first residual unit are connected in a residual-like network manner; wherein the channel characteristic information $q_{k,t}$ is processed by the second LSTM and the first residual neural network to obtain a phase shifter angle $\Theta_t$, and the computing module is configured to calculate and output the precoding matrix Ft based on the phase shifter angle $\Theta_t$;
   the second network module comprises a third LSTM, a second residual neural network and a normalization module that are connected in sequence, an input end of the normalization module is connected to an output end of the computing module, the second residual neural network comprises a second one-dimensional convolutional network and a second residual unit consisting of n convolutional neural networks, and the second one-dimensional convolutional network and the second residual unit are connected in a residual-like network manner; wherein the channel characteristic information $q_{k,t}$ is processed by the third LSTM, the second residual neural network and the normalization module to obtain and output the precoding matrix Wt; and
   a matrix size corresponding to the first residual neural network is different from a matrix size of the second residual neural network.

5. The method of claim 3, wherein the base station comprises at least one second sub-network, wherein different second sub-networks have different compression rates;
the method comprises:

arranging at least one analog sub-network at a base station side based on a structure of the first sub-network, wherein the analog sub-network has a same structure as the first sub-network, and different analog sub-networks have different compression rates;
connecting the analog sub-network with the second sub-network to obtain at least one precoding matrix determination network, wherein the analog sub-network with the second sub-network have the same compression rate;
obtaining channel estimation information $h_{k,t}$ from each UE;
determining a sample data set H based on the channel estimation information $h_{k,t}$ from each UE; and
training the precoding matrix determination network based on the sample data set H.

6. The method of claim 5, comprising:

determining network parameters corresponding to the analog sub-network that has been trained; and
sending the network parameters to the UE.

7. A precoding matrix determination method, performed by a user equipment (UE), comprising:

determining channel estimation information $h_{k,t}$, wherein k is used to indicate a $k^{th}$ UE and t is used to indicate a timestamp corresponding to the channel estimation information $h_{k,t}$;
determining channel characteristic information $q_{k,t}$ based on the channel estimation information $h_{k,t}$, wherein a dimension of the channel characteristic information $q_{k,t}$ is lower than a dimension of the channel estimation information $h_{k,t}$; and
sending the channel characteristic information $q_{k,t}$ and a compression rate parameter y to a base station.

8. The method of claim 7, wherein determining the channel characteristic information $q_{k,t}$ based on the channel estimation information $h_{k,t}$ comprises:

inputting the channel estimation information $h_{k,t}$ into a first sub-network to output the channel characteristic information $q_{k,t}$;
wherein the first sub-network comprises a first convolutional neural network and a first long short term memory (LSTM) that are connected in a residual-like network manner, and the compression rate parameter y is a compression rate of the first sub-network.

9. The method of claim 8, further comprising:

receiving network parameters sent by the base station; and
arranging the first sub-network based on the network parameters.

10. A precoding matrix determination apparatus, comprising:

an obtaining module, configured to obtain channel characteristic information $q_{k,t}$ and a compression rate parameter $\gamma$ from a user equipment (UE), wherein k is used to indicate a $k^{th}$ UE and t is used to indicate a timestamp corresponding to the channel characteristic information $q_{k,t}$; and
a determining module, configured to determine precoding matrices Ft and Wt based on the compression rate parameter y and the channel characteristic information $q_{k,t}$.

11. A precoding matrix determination apparatus, comprising:

a determining module, configured to determine channel estimation information $h_{k,t}$, wherein k is used to indicate a $k^{th}$ UE and t is used to indicate a timestamp corresponding to the channel estimation information $h_{k,t}$;
wherein the determining module is configured to determine channel characteristic information $q_{k,t}$ based on the channel estimation information $h_{k,t}$, wherein a dimension of the channel characteristic information $q_{k,t}$ is lower than a dimension of the channel estimation information $h_{k,t}$; and
a sending module, configured to send the channel characteristic information $q_{k,t}$ and a compression rate parameter y to a base station.

12. A communication device, comprising a processor and a memory having a computer program stored thereon, wherein when the computer program is executed by the processor, the device is caused to perform the method of any one of claims 1 to 6.

13. A communication device, comprising a processor and a memory having a computer program stored thereon, wherein when the computer program is executed by the processor, the device is caused to perform the method of any one of claims 7 to 9.

14. A communication device, comprising: a processor and an interface circuit, wherein

the interface circuit is configured to receive code instructions and transmit the code instructions to the processor; and
the processor is configured to run the code instructions to perform the method of any one of claims 1 to 6.

15. A communication device, comprising: a processor and an interface circuit, wherein

the interface circuit is configured to receive code instructions and transmit the code instructions to the processor; and
the processor is configured to run the code instructions to perform the method of any one of claims 7 to 9.

16. A computer-readable storage medium for storing instructions, wherein when the instructions are executed, the method of any one of claims 1 to 6 is performed.

17. A computer-readable storage medium for storing instructions, wherein when the instructions are executed, the method of any one of claims 7 to 9 is performed.

obtain channel characteristic information and a compression rate parameter from a UE

101a

determine precoding matrices Ft and Wt based on the channel characteristic information and the compression rate parameter

102a

FIG. 1a

$$\{h_{k,t}\} \quad 2N_t K \times T$$

first convolutional neural network

$M \times T$

$s_{1,k,t}$

$c_{1,k,t}$

first LSTM

$M \times T \quad \{q_{k,t}\}$

first subnetwork

FIG. 1b

FIG. 1c

arrange at least one analog sub-network at the base station based on a structure of the first sub-network, in which the analog sub-network has the same structure as the first sub-network, and different analog sub-networks have different compression rates — 201a

connect the analog sub-network with the second sub-network having the same compression rate to obtain at least one precoding matrix determination network; — 202a

obtain channel estimation information from each UE — 203a

determine a sample data set H based on the channel estimation information from each UE — 204a

train the precoding matrix determination network based on the sample data set H — 205a

determine network parameters corresponding to the analog sub-network after training — 206a

send the network parameters to the UE — 207a

FIG. 2a

FIG. 2b

arrange at least one analog sub-network at the base station based on a structure of the first sub-network, in which the analog sub-network has the same structure as the first sub-network, and different analog sub-networks have different compression rates ⟋ 301

connect the analog sub-network with the second sub-network having the same compression rate to obtain at least one precoding matrix determination network; ⟋ 302

obtain channel estimation information from each UE ⟋ 303

determine a sample data set H based on the channel estimation information from each UE ⟋ 304

train the precoding matrix determination network based on the sample data set H ⟋ 305

determine network parameters corresponding to the analog sub-network after training ⟋ 306

send the network parameters to the UE ⟋ 307

obtain channel characteristic information and a compression rate parameter from a UE ⟋ 308

determine precoding matrices Ft and Wt based on the channel characteristic information and the compression rate parameter ⟋ 309

FIG. 3

```
┌─────────────────────────────────────────────────────────────────────┐
│                                                                       │  ─ 401
│              determine channel estimation information                 │
│                                                                       │
└─────────────────────────────────────────────────────────────────────┘
                                    │
                                    ▼
┌─────────────────────────────────────────────────────────────────────┐
│ determine channel characteristic information based on the channel     │  ─ 402
│ estimation information, in which a dimension of the channel            │
│ characteristic information is lower than that of the channel estimation│
│                           information                                 │
└─────────────────────────────────────────────────────────────────────┘
                                    │
                                    ▼
┌─────────────────────────────────────────────────────────────────────┐
│                                                                       │  ─ 403
│ send the channel characteristic information and a compression rate     │
│ parameter to a base station                                           │
└─────────────────────────────────────────────────────────────────────┘
```

FIG. 4

```
┌─────────────────────────────────────────────────────────────────────┐
│                                                                       │  ─ 501
│            receive network parameters sent by the base station        │
│                                                                       │
└─────────────────────────────────────────────────────────────────────┘
                                    │
                                    ▼
┌─────────────────────────────────────────────────────────────────────┐
│                                                                       │  ─ 502
│         arrange the first sub-network based on the network parameters  │
│                                                                       │
└─────────────────────────────────────────────────────────────────────┘
                                    │
                                    ▼
┌─────────────────────────────────────────────────────────────────────┐
│                                                                       │  ─ 503
│              determine channel estimation information                 │
│                                                                       │
└─────────────────────────────────────────────────────────────────────┘
                                    │
                                    ▼
┌─────────────────────────────────────────────────────────────────────┐
│ determine channel characteristic information based on the channel     │  ─ 504
│ estimation information, in which a dimension of the channel            │
│ characteristic information is lower than that of the channel estimation│
│                           information                                 │
└─────────────────────────────────────────────────────────────────────┘
                                    │
                                    ▼
┌─────────────────────────────────────────────────────────────────────┐
│                                                                       │  ─ 505
│ send the channel characteristic information and a compression rate     │
│ parameter to a base station                                           │
└─────────────────────────────────────────────────────────────────────┘
```

FIG. 5

EP 4 489 321 A1

600

precoding matrix determination apparatus

601

obtaining module

602

determining module

FIG. 6

700

precoding matrix determination apparatus

701

determining module

702

sending module

FIG. 7

800

804 — memory

802 — Processing component

806 — power component

processor

820

808 — multimedia component

810 — audio component

communication component — 816

sensor component — 814

I/O interface

812

FIG. 8

900

922 — Processing component

power component — 926

932 — memory

network interface — 950

I/O interface — 958

FIG. 9

## INTERNATIONAL SEARCH REPORT

| International application No. |
| --- |
| **PCT/CN2022/078445** |

**A. CLASSIFICATION OF SUBJECT MATTER**

H04B 7/0456(2017.01)i; H04B 7/0413(2017.01)i; G06N 3/02(2006.01)i

According to International Patent Classification (IPC) or to both national classification and IPC

**B. FIELDS SEARCHED**

Minimum documentation searched (classification system followed by classification symbols)

H04B; G06N

Documentation searched other than minimum documentation to the extent that such documents are included in the fields searched

Electronic data base consulted during the international search (name of data base and, where practicable, search terms used)

CNTXT; CNKI; ENTXT; 3GPP; ENTXTC: 预编码矩阵, 压缩, 信道状态信息, 信道估计, 卷积神经网络, 长短期记忆网络, 残差, 产生, 确定, precoding matrix, compress, CSI, channel estimation, CNN, LSTM, residual, produce, determine

**C. DOCUMENTS CONSIDERED TO BE RELEVANT**

| Category* | Citation of document, with indication, where appropriate, of the relevant passages | Relevant to claim No. |
| --- | --- | --- |
| X | CN 105812042 A (UNIVERSITY OF ELECTRONIC SCIENCE AND TECHNOLOGY OF CHINA) 27 July 2016 (2016-07-27) description, paragraphs [0007]-[0059] | 1, 7, 10-17 |
| A | CN 105812042 A (UNIVERSITY OF ELECTRONIC SCIENCE AND TECHNOLOGY OF CHINA) 27 July 2016 (2016-07-27) description, paragraphs [0007]-[0059] | 2-6, 8, 9 |
| X | US 2013142228 A1 (METANOIA COMMMUNCATIONS INC.) 06 June 2013 (2013-06-06) description, paragraph [0076] | 1, 7, 10-17 |
| A | US 2022038145 A1 (HUAWEI TECHNOLOGIES CO., LTD.) 03 February 2022 (2022-02-03) entire document | 1-17 |
| A | CN 102104452 A (HUAWEI TECHNOLOGIES CO., LTD.) 22 June 2011 (2011-06-22) entire document | 1-17 |
| A | WO 2021217519 A1 (HUAWEI TECHNOLOGIES CO., LTD.) 04 November 2021 (2021-11-04) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2022** | **17 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/078445**

| Patent document cited in search report | | | Publication date (day/month/year) | Patent family member(s) | | | Publication date (day/month/year) |
|---|---|---|---|---|---|---|---|
| CN | 105812042 | A | 27 July 2016 | None | | | |
| US | 2013142228 | A1 | 06 June 2013 | None | | | |
| US | 2022038145 | A1 | 03 February 2022 | WO | 2020199964 | A1 | 08 October 2020 |
| | | | | EP | 3952120 | A1 | 09 February 2022 |
| CN | 102104452 | A | 22 June 2011 | WO | 2011076110 | A1 | 30 June 2011 |
| | | | | US | 2012257579 | A1 | 11 October 2012 |
| WO | 2021217519 | A1 | 04 November 2021 | None | | | |

Form PCT/ISA/210 (patent family annex) (January 2015)